# EUROPEAN PATENT SPECIFICATION

(11) **EP 2 921 385 B1**
(45) Date of publication and mention of the grant of the patent: **30.10.2019**
(21) Application number: 15156863.1
(22) Date of filing: 27.02.2015
(51) Int. Cl.: B62J 25/00

(54) **Saddle-ride-type vehicle**
Sattelfahrzeug
Véhicule à monture de selle

(30) Priority: 19.03.2014 JP 2014056326; 09.10.2014 JP 2014208421
(43) Date of publication of application: 23.09.2015
(73) Proprietor: HONDA MOTOR CO., LTD., Tokyo, 107-8556 (JP)
(72) Inventor: Atsuchi, Michio, Saitama, 351-0193 (JP); Nagayama, Masashi, Saitama, 351-0193 (JP); Kuramitsu, Tomofumi, Saitama, 351-0193 (JP); Fukushima, Manabu, Saitama, 351-0193 (JP); Kinoshita, Nobuaki, Saitama, 351-0193 (JP); Yokouchi, Kohei, Saitama, 351-0193 (JP)
(74) Representative: Beder, Jens

(56) References cited:
- EP-A1- 1 847 451
- EP-A1- 1 864 900
- EP-A1- 2 703 272
- EP-A2- 1 243 500
- EP-A2- 1 496 241
- JP-A- 2000 313 388
- JP-A- 2001 310 784

## Description

The present invention relates to a saddle-ride-type vehicle provided with a step on which a rider places his feet and an undercover which covers the step from below.

Various types of saddle-ride-type vehicles where a rider is seated on a seat in a straddling manner and places his feet on steps, and travels the vehicle have been practically used. Further, there has been known a saddle-ride-type vehicle which is configured such that a radiator is arranged on a front side of the vehicle and a lower portion of the vehicle is covered with an undercover (see JP-A-2013-193641 (Fig. 20), for example).

As shown in Fig. 20 of JP-A-2013-193641, a fuel tank (40) (numeral with a parenthesis indicating a symbol described in JP-A-2013-193641, the same definition being applicable hereinafter) is arranged behind a radiator (41) in the longitudinal direction of the vehicle. It is not desirable that hot air discharged from the radiator (41) directly reaches the fuel tank (40). In view of the above, in JP-A-2013-193641, an intermediate wall (273d) is provided in front of the fuel tank (40), a gap is formed between the intermediate wall (273d) and the fuel tank (40), and cold air (traveling air which does not pass through the radiator) is made to flow through the gap as indicated by arrows (A1 to A4) thus shielding heat.

Although a traveling air can be acquired during traveling, during parking or low speed traveling, expected traveling air cannot be acquired. As a result, there has been a demand for the structure which has higher heat shielding effect.

Assuming that a heat shielding member is added, the number of parts is increased so that a parts cost is increased. Under a current situation where the reduction of cost is required, the increase of the number of parts is not desirable.

Accordingly, there has been a demand for a saddle-ride-type vehicle which can suppress the increase of the number of parts while increasing a heat shielding effect.

A saddle-ride-type vehicle, in which all features of the preamble of claim 1 are disclosed, is described in EP 1 847 451 A1.

It is an object of the invention to provide a saddle-ride-type vehicle which can suppress the increase of the number of parts while increasing a heat shielding effect.

This object is achieved by a saddle-ride-type vehicle according to the enclosed claim 1. Advantageous features of the present invention are defined in the corresponding subclaims.

According to the invention, the front wall portion and the rear wall portion exhibit a heat shielding action and, in addition to such an action, an air layer formed between the front wall portion and the rear wall portion exhibits a heat insulation action. Accordingly, heat shielding effect can be largely increased. Since traveling air is not positively used, there is no outstanding difference in a heat shielding effect between during traveling and during parking whereby a sufficient heat shielding action can be acquired even during parking.

The hollow heat shielding wall can be integrally formed with the undercover and hence, it is possible to suppress the increase of the number of parts.

According to the invention, it is possible to provide a saddle-ride-type vehicle which can suppress the increase of the number of parts while increasing a heat sealing effect.

Further, the hollow heat shielding wall includes the ceiling. Leakage of air in the upward direction can be prevented by the ceiling and hence, air stagnates in the inside of the hollow heat sealing wall whereby a heat insulating effect can be increased. Further, the hollow heat sealing wall is closed by the ceiling and hence, pebbles or mud water splashed up from a road minimally enter the inside of the undercover.

According to the invention called for in claim 2, the high-temperature component is the radiator arranged between the front wheel and the electric component. Since high-temperature discharge air from the radiator is shielded by the hollow heat shielding wall having a large heat shielding effect, it is possible to favorably protect electric component.

Further, according to the invention called for in claim 2, the discharge air opening portion is formed in the undercover and hence, there is a possibility that rigidity is lowered due to the provision of the discharge air opening portion. However, the hollow heat shielding wall is provided adjacent to the discharge air opening portion and rigidity of the hollow heat shielding wall is high and hence, the undercover can maintain rigidity as a whole.

According to the invention called for in claim 3, the electric component is a battery, the battery is arranged in an offset manner toward the other side with respect to the vehicle body center line and hence, the hollow heat shielding wall is provided only in front of the battery in the longitudinal direction of the vehicle.

By arranging the battery which is a heavy object on the other side which is a side opposite to the power unit, the improvement of the lateral balance can be increased.

Further, by providing the hollow heat shielding wall only on portions which require heat shielding and hence, large sizing and the increase of weight of the undercover can be suppressed. When the hollow heat shielding wall is made of a resin, a resin material can be saved.

According to the invention called for claim 4, the step includes the battery storing recessed portion which opens upwardly and stores a battery therein, and the lid which closes the battery storing recessed portion.

Accordingly, the battery is shielded from heat by the wall of the battery storing recessed portion in addition to the hollow heat shielding wall and hence, a heat shielding effect can be further increased.

According to the invention called for in claim 5, at least one of the front wall portion and the rear wall portion is a stepped wall. The stepped wall can increase rigidity compared to a flat wall.

According to the invention called for in claim 6, the high-temperature component is the vehicle drive source arranged behind the electric component in the longitudinal direction of the vehicle. Since heat generated by an internal combustion engine or a traveling electric motor is shielded by the hollow heat shielding wall having a large heat shielding effect, an electric component can be favorably protected.

The invention is to be explained more detailed in the following with reference to the accompanying drawing, wherein:
Fig. 1 is a left side view of a saddle-ride-type vehicle according to the invention.
Fig. 2 is a side view of an essential part of the saddle-ride-type vehicle according to the invention.
Fig. 3 is a plan view of the essential part of the saddle-ride-type vehicle.
Fig. 4 is a plan view of an essential part showing the inside of a step by removing a lid.
Fig. 5 is a plan view of the step.

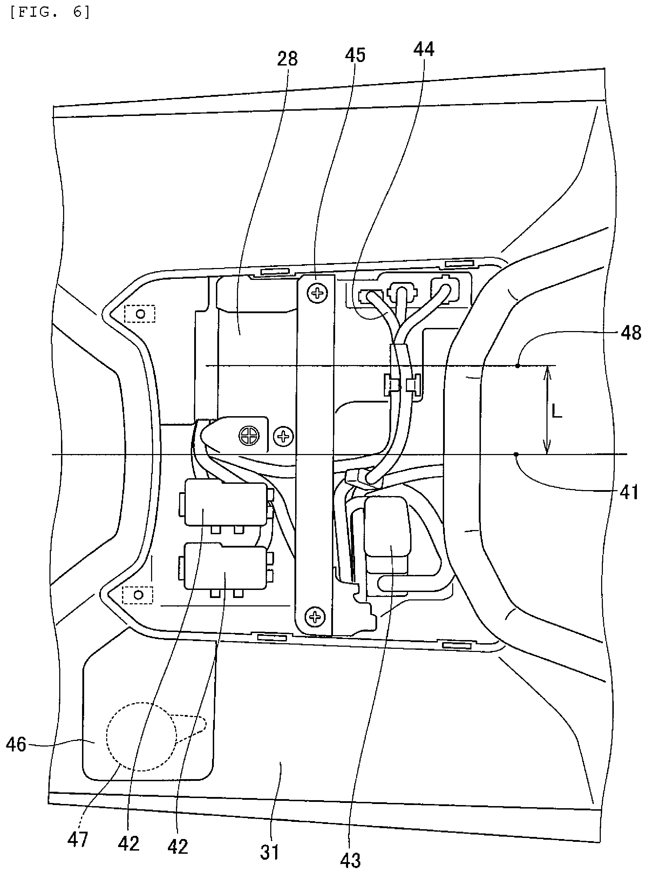

Fig. 6 is a left side view of the step.
Fig. 7 is a left side view of an undercover.
Fig. 8 is a view as viewed in the direction indicated by an arrow 8 in Fig. 7.
Fig. 9 is a cross-sectional view taken along a line 9-9 in Fig. 3.
Fig. 10 is a cross-sectional view for explaining a modification.
Fig. 11 is a left side view of a step according to another modification.
Fig. 12 is a cross-sectional view for explaining still another modification.

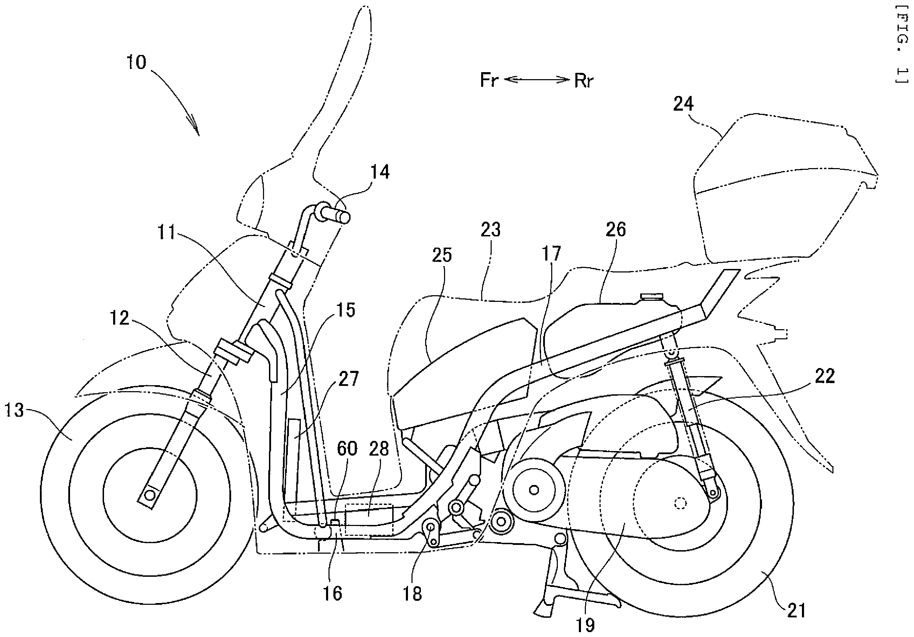

An embodiment of the invention is explained by reference to attached drawings. The drawings are viewed in accordance with the direction of symbols. Further, "frontward and rearward directions" (Fig. 1, Fr, Rr) and "leftward and rightward directions" are determined with reference to a rider sitting on a seat.

As shown in Fig. 1, a saddle-ride-type vehicle 10 is a two-wheeled vehicle which travels using a rear wheel 21 as a drive wheel. In the saddle-ride-type vehicle 10, a front fork 12 which incorporates a front cushion therein is steerably supported on a head pipe 11. A front wheel 13 is rotatably mounted on a lower portion of the front fork 12. A steering handle 14 is mounted on an upper portion of the front fork 12. Adown frame 15 is extended from the head pipe 11. A lower frame 16 is extended rearwardly in the longitudinal direction of the vehicle from a lower end of the down frame 15. A seat frame 17 is extended rearwardly in the longitudinal direction of the vehicle from a rear portion of the lower frame 16. A power unit 19 is extended rearwardly in the longitudinal direction of the vehicle from the rear portion of the lower frame 16 by way of a pivot shaft 18. The rear wheel 21 is supported on a rear portion of the power unit 19. An upper portion of a rear cushion 22 which is extended upwardly from the rear portion of the power unit 19 is connected to the seat frame 17.

The saddle-ride-type vehicle 10 includes: a seat 23 and a rear storage part 24 referred to as a top box which are supported on the seat rail 17; a luggage box 25 and a fuel tank 26 which are arranged below the seat 23; a radiator 27 which constitutes a high-temperature member and is arranged between the front wheel 13 and the seat 23; and a hollow heat shielding wall 60 and a battery 28 constituting an electric component which are arranged behind the radiator 27.

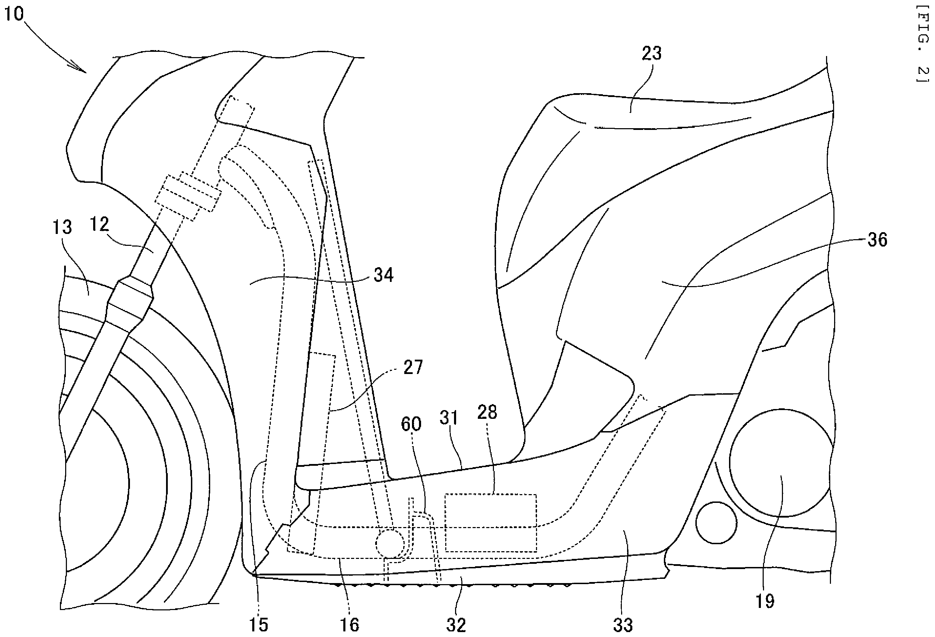

As shown in Fig. 2, the saddle-ride-type vehicle 10 further includes a floor-shaped step 31 which supports feet of the rider in front of and below the seat 23 on which the rider is seated, and an undercover 32 which covers the step 31 from below. In addition, the saddle-ride-type vehicle 10 includes: left and right under side covers 33 which close a gap formed between the step 31 and the undercover 32; a front cover 34 which is disposed in front of the step 31 and behind the front wheel 13; the battery 28 which is disposed at a position surrounded by the step 31, the undercover 32, and the left and right undercovers 33; and a rear cover 36 and the power unit 19 which are disposed behind the step 31.

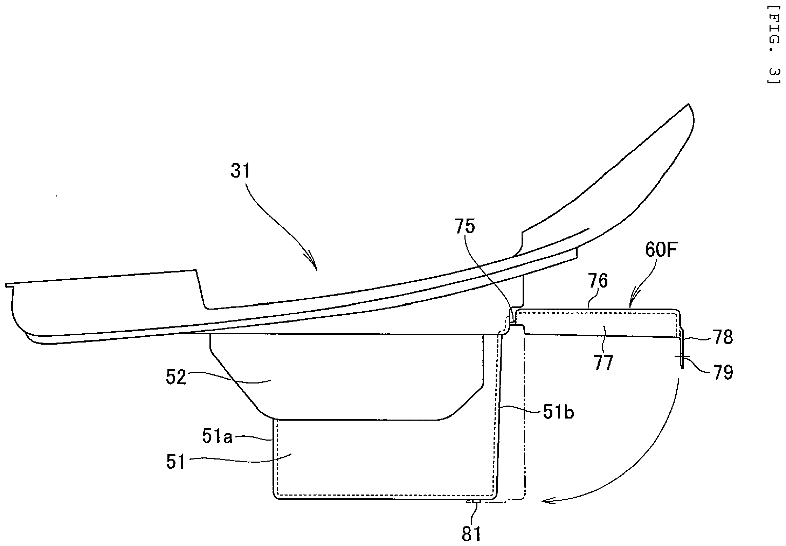

As shown in Fig. 3, the steering handle 14 and meters 37 are arranged in front of the step 31 in the longitudinal direction of the vehicle. The step 31 includes a lid 38 on a center portion thereof. The lid 38 can be removed from the step 31 by loosening screws 39, 39. An upper surface of the lid 38 is formed coplanar with an upper surface of the step 31. The upper surface of the step 31 forms a tread surface on which the rider places his feet.

The power unit 19 which is a heavy object is arranged on a left side in the vehicle width direction with respect to a vehicle body center line 41, and the battery 28 is arranged on a right side in the vehicle width direction with respect to the vehicle body center line 41. Accordingly, the balance is taken between the left side and the right side.

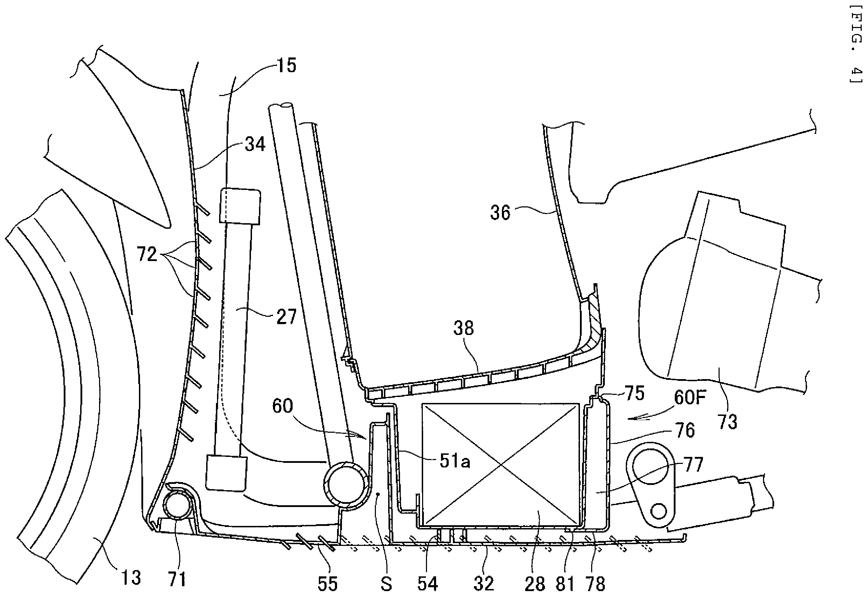

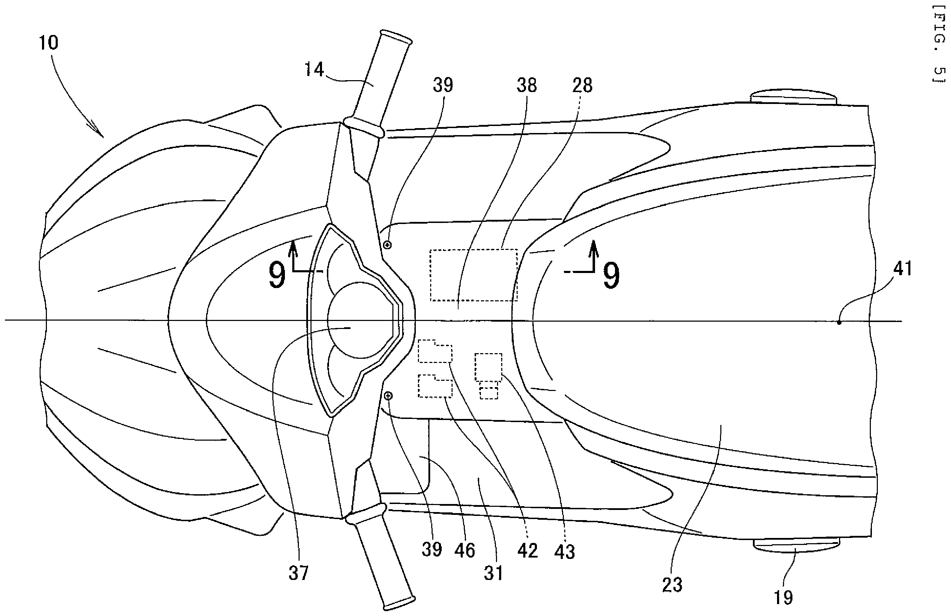

That is, as shown in Fig. 4 and Fig. 5, in a state where the lid 38 is removed, the battery 28 which forms an electric component is arranged at a position offset on a right side with respect to the vehicle body center line (center line in the vehicle width direction) 41 (on a side opposite to the power unit 19), and fuse boxes 42, 42, a coupler 43, a harness 44 are arranged on a left side with respect to the vehicle body center line 41. The battery 28 is fixed to the step 31 using a strip-shaped band 45. A small sub lid 46 is mounted on the step 31 on a left side in the vehicle width direction. The sub lid 46 is a lid which covers a radiator cooling liquid filling port 47 disposed below the sub lid 46.

A distance L exists between the vehicle body center line 41 and a center line 48 of the battery 28. That is, the battery 28 is arranged in an offset manner on a right side in the vehicle width direction with respect to the vehicle body center line 41. The battery 28 is heavy compared to the fuse box 42 and the like. By arranging the power unit (Fig. 3, symbol 19) on a side opposite to the battery 28, the saddle-ride-type vehicle 10 can take the balance in weight in the left and right directions between the power unit 19 and the battery 28.

The fuse boxes 42, 42 and the coupler 43 are arranged on a left side in the vehicle width direction with respect to the vehicle body center line 41. The battery 28, the fuse boxes 42, 42, the coupler 43 and the harness 44 are efficiently housed in the center of the step 31 whose volume and area are limited.

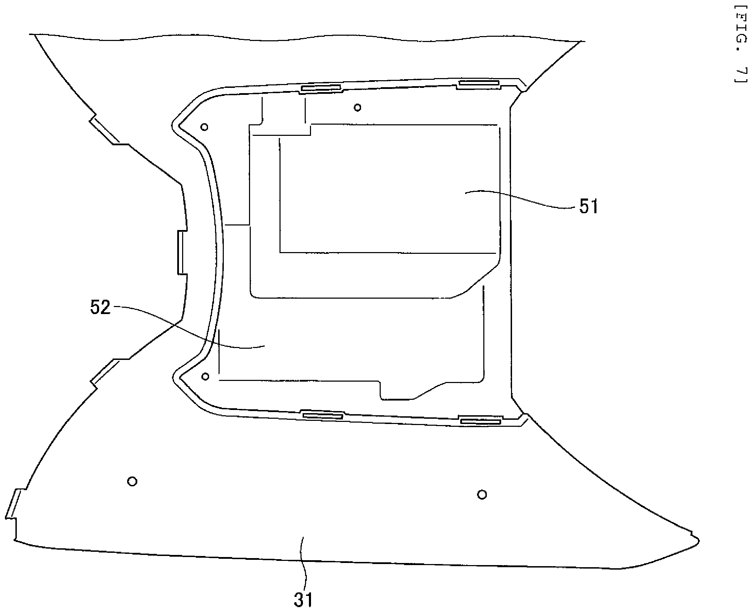

As shown in Fig. 7, the step 31 includes a battery storing recessed portion 51 and a recessed portion 52 for storing electric articles at the center in the vehicle width direction.

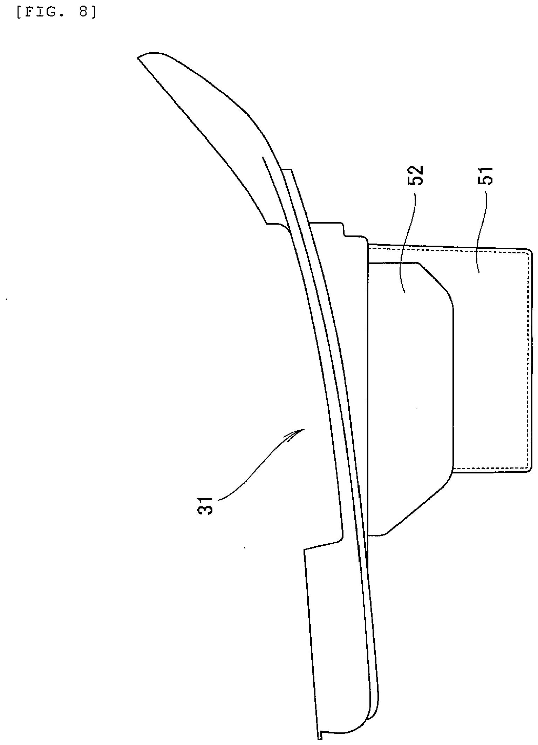

As shown in Fig. 8, the battery storing recessed portion 51 largely projects downwardly. The recessed portion 52 for storing electric articles projects downwardly but not as much as the battery storing recessed portion 51.

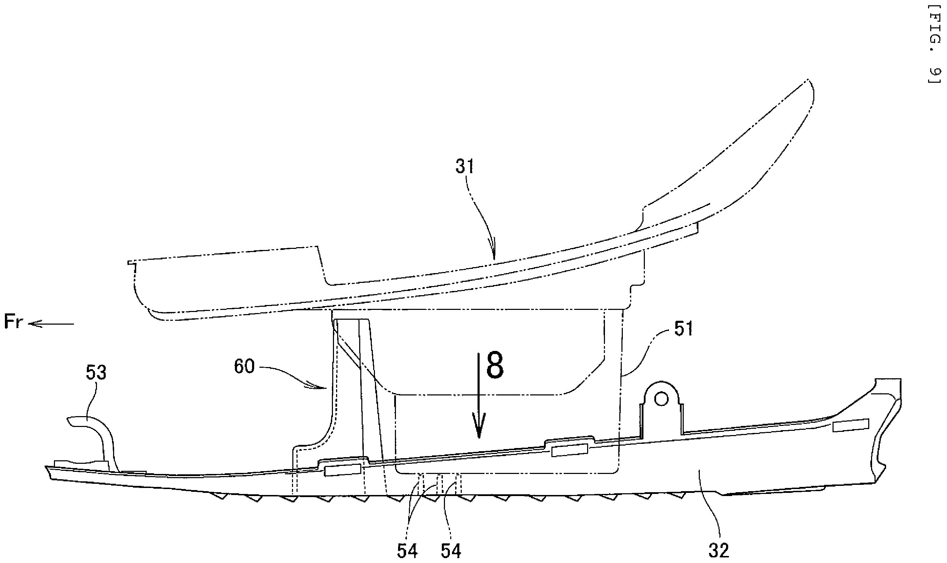

As shown in Fig. 9, the undercover 32 is a resin-molded product having a relatively shallow dish shape. The undercover 32 has a hook 53 on a distal end thereof. The undercover 32 also has a hollow heat shielding wall 60 which projects upwardly on a portion thereof behind the hook 53 in the longitudinal direction of the vehicle. The undercover 32 further includes ribs 54 which project upwardly slightly behind the hollow heat shielding wall 60 and are brought into contact with the battery storing recessed portion 51 indicated by an imaginary line. A space is defined between the battery storing recessed portion 51 and the undercover 32 by the ribs 54. That is, a gap defined between the step 31 indicated by an imaginary line and the undercover 32 indicated by a solid line is closed by under side covers (Fig. 2, symbol 33).

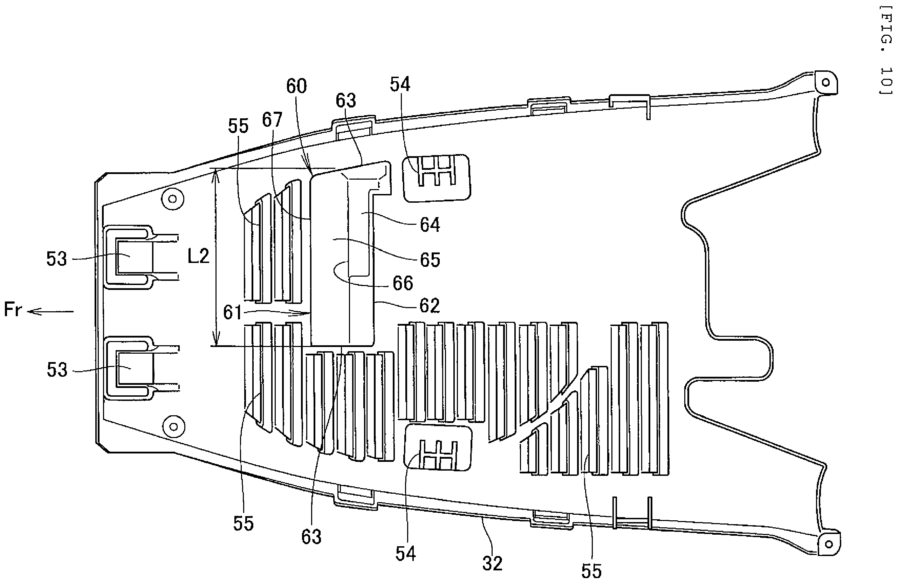

As shown in Fig. 10, the undercover 32 includes: hooks 53, 53 on a front portion thereof. The undercover 32 also includes the ribs 54, 54 on left and right sides thereof at an approximately center position in the longitudinal direction. The undercover 32 further includes the large hollow heat shielding wall 60 in front of the right rib 54. The undercover 32 still further includes a large number of discharge air opening portions 55 in front of the hollow heat shielding wall 60 in the longitudinal direction of the vehicle and on a left side of the hollow heat shielding wall 60.

Although explained in detail by reference to Fig. 9, the hollow heat shielding wall 60 is a box-shaped body or a cylindrical body constituted of a plurality of wall portions and has sufficient rigidity. The hollow heat shielding wall 60 is formed along the discharge air opening portions 55 and hence, the rigidity of the undercover 32 can be maintained although the discharge air opening portions 55 are formed.

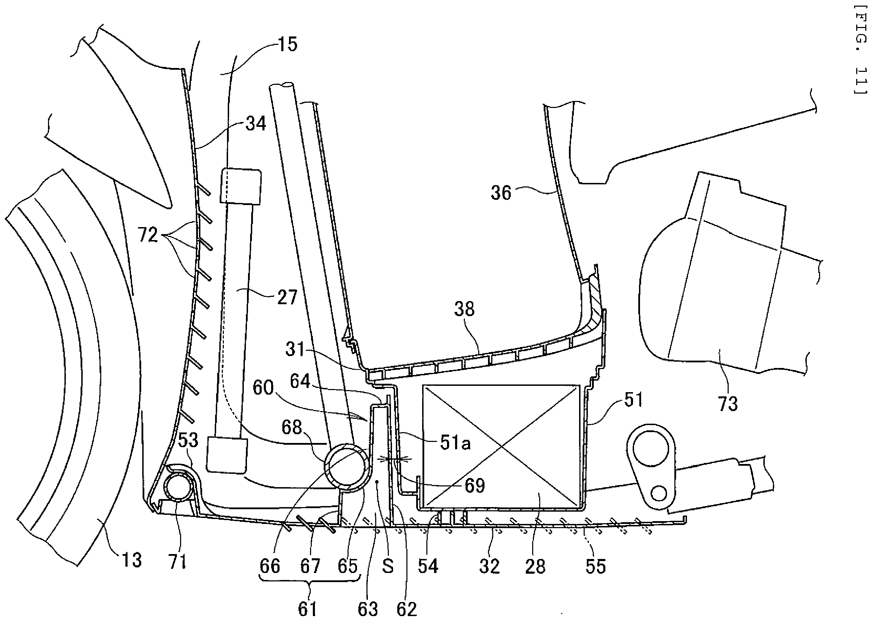

As shown in Fig. 11, a front portion of the undercover 32 is supported by hooking the hook 53 on the front lower cross frame 71.

The step 31 includes the battery storing recessed portion 51 and the removable lid 38. The battery 28 stored in the battery storing recessed portion 51 can be inspected by opening the lid 38. That is, the battery 28 is arranged between a tread surface of the step 31 (the surface at the same level as an upper surface of the lid 38) and the undercover 32.

Further, the undercover 32 includes the hollow heat shielding wall 60 as an integral part thereof. The hollow heat shielding wall 60 includes, at least, a front wall portion 61 and a rear wall portion 62 which is formed in a spaced-apart manner from the front wall portion 61. The hollow heat shielding wall 60, more preferably, includes: left and right side wall portions 63 which respectively connect left and right end portions of the front wall portion 61 and left and right end portions of the rear wall portion 62 to each other; and a ceiling 64. The hollow heat shielding wall 60 is still more preferably formed such that the front wall portion 61 is formed into a stepped shape. That is, the front wall portion 61 is formed into a stepped wall which is constituted of: a horizontal portion 65 which corresponds to a tread surface of a step; an upper wall portion 66 which is raised from the horizontal portion 65; and a lower wall portion 67 which extends downwardly from the horizontal portion 65. Due to a space S defined by the front wall portion 61, the rear wall portion 62, the left and right side wall portions 63 and the ceiling 64, a heat shielding effect can be increased.

The stepped wall can increase rigidity compared to a flat wall and hence, the stepped wall can contribute to the increase of rigidity of the whole undercover 32. The front wall portion 61 has the stepped shape and hence, the front wall portion 61 can be arranged close to the cross member 68. The horizontal portion 65 of the stepped wall is formed along the curve of a pipe of the cross member 68 and hence, the frame can be used also as a rigid member for the cover.

Further, it is possible to secure a space which forms an air layer (a gap 69) between the front wall portion 61 and the rear wall portion 62.

The hollow heat shielding wall 60 having the above-mentioned structure is arranged such that the hollow heat shielding wall 60 projects upwardly between the radiator 27 disposed right behind the front wheel 13 and the battery 28. A plurality of air introducing opening portions 72 which introduce traveling air are formed in the front cover 34 arranged in front of the radiator 27 in the longitudinal direction of the vehicle in a state where the plurality of air introducing opening portions 72 are arranged in the vertical direction. Traveling air which passes through the air introducing opening portions 72 cools the radiator 27, while the traveling air per se is heated and becomes discharge air. The discharge air flows toward a rear side of the vehicle, and is discharged mainly from the discharge air opening portions 55.

During such an operation, the radiator 27 is at a higher temperature than the battery 28 and hence, heat which the radiator 27 generates moves toward the battery 28. An air layer (space S) exists between the front wall portion 61 and the rear wall portion 62, and this air layer exhibits the favorable heat shielding performance. Further, in this embodiment, the front wall portion 61, the rear wall portion 62 and the front wall 51a of the battery storing recessed portion 51 form a heat shielding wall and exhibit a favorable heat shielding action. As a result, the increase of a temperature of the battery 28 can be suppressed.

It is sufficient that a width of the hollow heat shielding wall 60 in the vehicle width direction (Fig. 8, symbol L2) is equal to a width of the battery 28 in the vehicle width direction. As a result, the increase of a weight and the large-sizing of the undercover 32 can be prevented. In case that the undercover 32 is a resin molded product, a resin material can be saved.

Although the ceiling 64 of the hollow heat shielding wall 60 may be omitted, it is preferable to provide the ceiling 64. By providing the ceiling 64, there is no possibility that heated air is leaked upwardly. Since there is no movement of air (the movement of air being small even when air moves), the convective heat transfer can be suppressed so that the heat shielding performance can be increased. Additionally, since heat is shielded by the ceiling 64, there is no possibility that flying pebbles or mud water enters the inside of the undercover 32 thorough the hollow heat shielding wall 60.

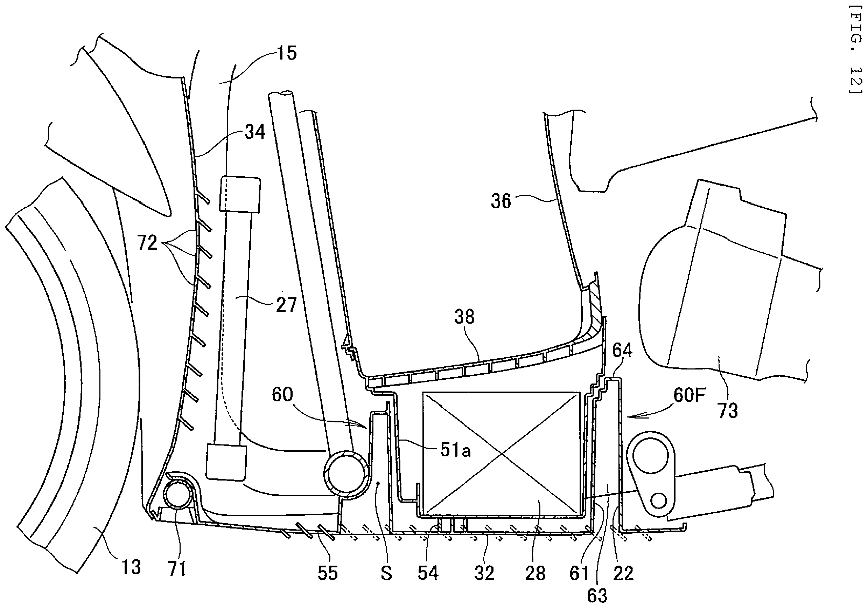

As shown in Fig. 12, a rear hollow heat shielding wall 60F may be provided behind the battery 28. Due to the provision of the rear hollow heat shielding wall 60F, it is possible to shield heat which is directed toward the battery 28 from the vehicle drive source 73.

It is also possible to provide the hollow heat shielding wall 60 in front of the battery 28 and the rear hollow heat shielding wall 60F behind the battery 28 respectively.

In the explanation made heretofore, the hollow heat shielding walls 60, 60F are mounted on the undercover 32. However, the hollow heat shielding walls 60, 60F may be mounted on the battery storing recessed portion 51. A specific example of this case is explained hereinafter.

As shown in Fig. 4, the battery storing recessed portion 51 is integrally formed with the step 31, and the rear hollow heat shielding wall 60F is connected to at least one of the front wall 51a and a rear wall 51b (in this embodiment, the rear wall 51b) which forms the battery storing recessed portion 51 by way of a bendable movable portion 75. The rear hollow heat shielding wall 60F is formed simultaneously with the step 31 by a resin injection molding method.

As shown in Fig. 3, the rear hollow heat shielding wall 60F is constituted of a spaced-apart wall 76, a peripheral wall 77 which is raised from the spaced-apart wall 76, and a tongue member 78 which is formed on a portion of the rear hollow heat shielding wall 60F remotest from the movable portion 75. A hole 79 having an approximately 5mm is formed in the tongue member 78. A projection 81 which projects downwardly from the spaced-apart wall of the battery storing recessed portion 51 is fitted in the hole 79.

As shown in Fig. 4, the movable portion 75 is formed as a fragile portion having a thickness smaller than a thicknesses of other portions so that the movable portion 75 can be easily bent. Accordingly, by bending the movable portion 75 by an approximately 90°, as indicated by an imaginary line, an open end of the peripheral wall 77 is brought into contact with the rear wall 51b. The tongue member 78 is engaged with the projection 81. It is sufficient that the movable portion 75 is formed of a hinge and hence, another hinge structure may be adopted as the movable portion 75 besides the case where the movable portion 75 is formed of the small wall thickness member.

As shown in Fig. 4, the rear hollow heat shielding wall 60F is interposed between the battery 28 and the vehicle drive source 73. With respect to the rear hollow heat shielding wall 60F, the spaced-apart wall 76 is arranged parallel to the rear wall 51b, and air existing between the spaced-apart wall 76 and the rear wall 51b is substantially sealed by the peripheral wall 77. The flow of air is suppressed and hence, the heat insulation performance can be increased.

In this embodiment, the rear hollow heat shielding wall 60F is connected to the rear wall 51b by way of the movable portion 75. However, the movable portion 75 may be omitted. That is, a pentahedron rear hollow heat shielding wall 60F which is formed of the spaced-apart wall 76 and the peripheral wall 77 may be prepared as a separate part, and the separate part may be fixed to the rear wall 51b using an adhesive agent or screws.

From a viewpoint of forming an air layer having a fixed thickness, the rear hollow heat shielding wall 60F may be formed of only the spaced-apart wall 76 which is spaced apart from the rear wall 51b while omitting the peripheral wall 77. However, by forming rear hollow heat shielding wall 60F by also using the peripheral wall 77, the flow-in and the flow-out of air can be suppressed so that a heat insulation action can be increased.

Further, the hollow heat shielding wall 60 may be also attached to the front wall 51a. As a result of attaching the hollow heat shielding wall 60 in this manner, the undercover 32 becomes substantially flat. By forming the undercover 32 into a flat shape, traveling air is minimally entangled and hence, the undercover 32 having a flat shape is preferable from this point.

The electric components indicate electric or electronic components in general which are relatively easily affected by heat such as a circuit board having an electronic circuit and the like besides the battery 28 and the fuse box 26 exemplified in the embodiment.

Further, as the vehicle drive source 73, any kind of vehicle drive sources may be used provided that the vehicle drive source is a drive source which generates a drive force for making a vehicle travel such as a gasoline engine, an electric motor, or a hydraulic motor. The drive source generates heat and hence, the drive source corresponds to a high-temperature component.

Further, although the hollow heat shielding walls 60, 60F are integrally formed with the undercover 32 by integral molding, the hollow heat shielding walls 60, 60F may be formed integrally with the undercover 32 by posteriorly mounting the hollow heat shielding walls 60, 60F on the undercover 32 by using screws, by ultrasonic vibration fusing or the like.

Further, in the embodiment, the battery storing recessed portion 51 is formed on the step 31. However, by providing the structure where the battery 28 is arranged between the step 31 and the undercover 32 in a state where the battery 28 is supported on a bracket which extends from the vehicle body frame, it is possible to prevent the weight of the battery 28 from being applied to the step 31.

The invention is applicable to a saddle-ride-type vehicle where a floor-shaped step is disposed in front of a seat.

### Description of Reference Numerals and Signs

10: saddle-ride-type vehicle
13: front wheel
19: power unit
23: seat
27: high temperature component (radiator)
28: electric component (battery)
31: step
32: undercover
38: lid
41: vehicle body center line
48: center line of battery
51: battery storing recessed portion
51a: front wall of battery storing recessed portion
51b: rear wall of battery storing recessed portion
55: discharge air opening portion
60, 60F: hollow heat shielding wall
61: front wall portion
62: rear wall portion
63: left wall portion, right wall portion
64: ceiling
73: high temperature component (vehicle drive source)
75: movable portion
76: spaced-apart wall
77: peripheral wall
L: offset amount (distance)

## Claims

1. A saddle-ride-type vehicle (10) provided with a seat (23) on which a rider is seated, a floor-shaped step (31) which supports legs of the rider, and an undercover (32) which covers the step (31) from below, wherein
an electric component (28) is arranged below a tread surface of the step (31) and above the undercover (32), a high-temperature component (27, 73) having a higher temperature than the electric component (28) is arranged at a position above the undercover (32),
a hollow heat shielding wall (60, 60F) having a front wall portion (61) and a rear wall portion (62) formed behind the front wall portion (61) in a spaced-apart manner is formed on the undercover (32) in an upwardly projecting manner, wherein
the hollow heat shielding wall (60, 60F) includes left and right side wall portions (63) respectively connect left and right end portions of the front wall portion (61) and left and right end portions of the rear wall portion (62) to each other, and **characterized in that** a ceiling (64) connects an
upper end of the front wall portion (61), an upper end of the rear wall portion (62) and upper ends of the left and right side wall portions (63) to each other so that leakage of air in the upward direction is prevented by the ceiling (64).

2. The saddle-ride-type vehicle according to claim 1, wherein
the high-temperature component (27) is a radiator (27) arranged between a front wheel (13) and the electric component (28), a discharge air opening portion (55) which guides discharged air from the radiator (27) is formed in the undercover (32), and at least a portion of the hollow heat shielding wall (60, 60F) is arranged adjacent to the discharge air opening portion (55).

3. The saddle-ride-type vehicle according to claim 1 or 2, wherein
the saddle-ride-type vehicle includes a power unit (19) which is swingably supported at one side of a vehicle body center line (41), and
the electric component (28) is a battery, the battery (28) is arranged in an offset manner toward the other side with respect to the vehicle body center line (41), and the hollow heat shielding wall (60) is disposed only in front of the battery (28) in the longitudinal direction of the vehicle.

4. The saddle-ride-type vehicle according to claim 3, wherein the step (31) includes
a battery storing recessed portion (51) which opens upwardly and stores the battery (28) therein, and a lid (38) which closes the battery storing recessed portion (51).

5. The saddle-ride-type vehicle according to any one of claims 1 to 4, wherein
at least one of the front wall portion (61) and the rear wall portion (63) is a stepped wall.

6. The saddle-ride-type vehicle according to claim 1, wherein
the high-temperature component (27, 73) is a vehicle drive source (73) arranged behind the electric component (28) in the longitudinal direction of the vehicle.

## Patentansprüche

1. Sattel-Fahrzeug (10) mit einem Sitz (23), auf dem ein Fahrer sitzt, einer bodenförmigen Fußstütze (31), die die Beine des Fahrers trägt, und einer unterseitigen Abdeckung (32), die die Stufe (31) von unten abdeckt, wobei
eine elektrische Komponente (28) unterhalb einer Trittfläche der Fußstütze (31) und oberhalb der unterseitigen Abdeckung (32) angeordnet ist, wobei eine Hochtemperaturkomponente (27, 73) mit einer höheren Temperatur als die elektrische Komponente (28) an einer Position oberhalb der unterseitigen Abdeckung (32) angeordnet ist,
eine hohle Hitzeschutzwand (60, 60F) mit einem Vorderwandabschnitt (61) und einem Rückwandabschnitt (62), der in einem Abstand voneinander hinter dem Vorderwandabschnitt (61) ausgebildet ist, auf der unterseitigen Abdeckung (32) in einer nach oben vorstehenden Weise ausgebildet ist, wobei die hohle Hitzeschutzwand (60, 60F) linke und rechte Seitenwandabschnitte (63) aufweist, die jeweils linke und rechte Endabschnitte des Vorderwandabschnitts (61) und linke und rechte Endabschnitte des Rückwandabschnitts (62) miteinander verbinden, und **dadurch gekennzeichnet, dass** eine Decke (64) ein oberes Ende des Vorderwandabschnitts (61), ein oberes Ende des Rückwandabschnitts (62) und obere Enden des linken und rechten Seitenwandabschnitts (63) zueinander verbindet, so dass ein Austreten von Luft in Aufwärtsrichtung durch die Decke (64) verhindert wird.

2. Sattel-Fahrzeug nach Anspruch 1, wobei
die Hochtemperaturkomponente (27) ein Kühler (27) ist, der zwischen einem Vorderrad (13) und der elektrischen Komponente (28) angeordnet ist, ein Abluftöffnungsabschnitt (55), der die Abluft aus dem Kühler (27) leitet, im Unterdach (32) ausgebildet ist und mindestens ein Abschnitt der hohlen Hitzeschutzwand (60, 60F) benachbart zu dem Abluftöffnungsabschnitt (55) angeordnet ist.

3. Sattel-Fahrzeug nach Anspruch 1 oder 2, wobei die Sattelkupplung das Sattel-Fahrzeug eine Antriebseinheit (19) beinhaltet, die schwenkbar an einer Seite einer Fahrzeugkarosserie-Mittellinie (41) gelagert ist, und
die elektrische Komponente (28) eine Batterie ist, die Batterie (28) gegenüber der Mittellinie (41) der Fahrzeugkarosserie versetzt zur anderen Seite angeordnet ist und die hohle Hitzeschutzwand (60) nur vor der Batterie (28) in Längsrichtung des Fahrzeugs angeordnet ist.

4. Sattel-Fahrzeug nach Anspruch 3, wobei die Fußstütze (31)
einen Batteriespeicherausschnittsabschnitt (51), der sich nach oben öffnet und die Batterie (28) darin speichert, und einen Deckel (38) aufweist, der den Batteriespeicherausschnittsabschnitt (51) schließt.

5. Sattel-Fahrzeug nach einem der Ansprüche 1 bis 4, wobei die folgende Formel gilt mindestens einer der Vorderwandabschnitte (61) und der Rückwandabschnitte (63) eine Stufenwand ist.

6. Sattel-Fahrzeug nach Anspruch 1, wobei
die Hochtemperaturkomponente (27, 73) eine Fahrzeugantriebsquelle (73) ist, die hinter der elektrischen Komponente (28) in Längsrichtung des Fahrzeugs angeordnet ist.

## Revendications

1. Véhicule de type à enfourcher (10) pourvu d'une selle (23) sur laquelle un motocycliste est assis, un marchepied en forme de plancher (31) qui supporte les jambes du motocycliste, et un cache inférieur (32) qui couvre le marchepied (31) par en dessous, dans lequel
un composant électrique (28) est agencé en dessous d'une surface de marche du marchepied (31) et au-dessus du cache inférieur (32), un composant haute température (27, 73) ayant une température plus élevée que le composant électrique (28) est agencé à une position au-dessus du cache inférieur (32),
une paroi de protection thermique creuse (60, 60F) ayant une partie de paroi avant (61) et une partie de paroi arrière (62) formée derrière la partie de paroi avant (61) de manière espacée est formée sur le cache inférieur (32) de manière à faire saillie vers le haut, dans lequel
la paroi de protection thermique creuse (60, 60F) comporte des parties de paroi de côté gauche et droite (63) qui raccordent respectivement des parties d'extrémité gauche et droite de la partie de paroi avant (61) et des parties d'extrémité gauche et droite de la partie de paroi arrière (62) les unes aux autres, et **caractérisé en ce qu'**un plafond (64) raccorde une extrémité supérieure de la partie de paroi avant (61), une extrémité supérieure de la partie de paroi arrière (62) et des extrémités supérieures des parties de paroi de côté gauche et droite (63) les unes aux autres de façon à empêcher une fuite d'air dans la direction vers le haut par le plafond (64).

2. Véhicule de type à enfourcher selon la revendication 1, dans lequel
le composant haute température (27) est un radiateur (27) agencé entre une roue avant (13) et le composant électrique (28), une partie d'ouverture d'air de refoulement (55) qui guide de l'air refoulé depuis le radiateur (27) est formée dans le cache inférieur (32), et au moins une partie de la paroi de protection thermique creuse (60, 60F) est agencée adjacente à la partie d'ouverture d'air de refoulement (55).

3. Véhicule de type à enfourcher selon la revendication 1 ou 2, dans lequel
le véhicule de type à enfourcher comporte une unité d'alimentation (19) qui est supportée en oscillation d'un côté d'une ligne centrale de caisse de véhicule (41), et
le composant électrique (28) est une batterie, la batterie (28) est agencée de manière décalée vers l'autre côté par rapport à la ligne centrale de caisse de véhicule (41), et la paroi de protection thermique creuse (60) est disposée uniquement devant la batterie (28) dans la direction longitudinale du véhicule.

4. Véhicule de type à enfourcher selon la revendication 3, dans lequel le marchepied (31) comporte
une partie en retrait de stockage de batterie (51) qui s'ouvre vers le haut et stocke la batterie (28) à l'intérieur, et un couvercle (38) qui ferme la partie en retrait de stockage de batterie (51).

5. Véhicule de type à enfourcher selon l'une quelconque des revendications 1 à 4, dans lequel
au moins l'une de la partie de paroi avant (61) et de la partie de paroi arrière (63) est une paroi étagée.

6. Véhicule de type à enfourcher selon la revendication 1, dans lequel
le composant haute température (27, 73) est une source d'entraînement de véhicule (73) agencée derrière le composant électrique (28) dans la direction longitudinale du véhicule.
